(19) **Europäisches Patentamt**

**European Patent Office**

**Office européen des brevets**

(11) Veröffentlichungsnummer: **0 327 158**
**A2**

(12) # EUROPÄISCHE PATENTANMELDUNG

(21) Anmeldenummer: **89200157.9**

(22) Anmeldetag: **25.01.89**

(51) Int. Cl.⁴: **B25B 9/02 , B25B 11/00 ,**
**G02B 7/02**

(30) Priorität: **01.02.88 DE 3802870**

(43) Veröffentlichungstag der Anmeldung:
**09.08.89 Patentblatt 89/32**

(84) Benannte Vertragsstaaten:
**CH DE FR GB IT LI SE**

(71) Anmelder: **Philips Patentverwaltung GmbH**
**Wendenstrasse 35 Postfach 10 51 49**
**D-2000 Hamburg 1(DE)**

㉘ **DE**

Anmelder: **N.V. Philips' Gloeilampenfabrieken**
**Groenewoudseweg 1**
**NL-5621 BA Eindhoven(NL)**

㉘ **CH FR GB IT LI SE**

(72) Erfinder: **Kerkhof, K.W.**
**Philips Eindhoven Prof.Holstlaan 6**
**NL-5600 MD Eindhoven(NL)**
Erfinder: **Slaats, A.A.A.**
**Philips Eindhoven Prof.Holstlaan 6**
**NL-5600 MD Eindhoven(NL)**
Erfinder: **Romberg, Alfons**
**Kronprinzenstrasse 9**
**D-5210 Troisdorf 1(DE)**

(74) Vertreter: **Koch, Ingo, Dr.-Ing. et al**
**Philips Patentverwaltung GmbH**
**Wendenstrasse 35 Postfach 10 51 49**
**D-2000 Hamburg 1(DE)**

(54) **Vorrichtung zur Halterung einer Kugellinse zwischen zwei Klemmelement.**

㊷ Die Erfindung betrifft eine Vorrichtung zur Halterung einer Kugellinse zwischen zwei Klemmelementen, welche einander gegenüberliegende kreisförmige Öffnungen aufweisen, deren Durchmesser kleiner als der Durchmesser der Kugellinse ist und deren Ringflächen die Kugellinsen derart erfassen, daß einander in der optischen Achse gegenüberliegende Kalottenflächen der Kugellinse für Beschichtungsprozesse zugänglich sind. Die Kugellinsen (8,14) werden auf einfache Weise gegen Erschütterungen lagegesichert durch von individuell zugeordneten Klemmelementen (9,10 bzw. 15,16) aufgebrachte federelastische Kräfte gehalten.

FIG.1

## Vorrichtung zur Halterung einer Kugellinse zwischen zwei Klemmelementen

Die Erfindung bezieht sich auf eine Vorrichtung zur Halterung einer Kugellinse zwischen zwei Klemmelementen, welche einander gegenüberliegende kreisförmige Öffnungen aufweisen, deren Durchmesser kleiner als der Durchmesser der Kugellinse ist und deren Ringflächen die Kugellinsen derart erfassen, daß einander in der optischen Achse gegenüberliegende Kalottenflächen der Kugellinse für Beschichtungsprozesse zugänglich sind.

Beim Aufbringen einer Antireflex-Beschichtung auf in der optischen Achse gegenüberliegenden Kuppen kleiner Kugellinsen ergeben sich Schwierigkeiten, die Kugellinsen in einer Beschichtungsvorrichtung definiert und gegen Erschütterungen gesichert fest zu haltern. Nach der Beschichtung eines der von der Haltevorrichtung freigelassenen kalottenförmigen Bereiche müssen die Kugellinsen mitsamt ihrer Halterung um 180° gedreht werden, damit die gegenüberliegende Kuppe beschichtet werden kann. Dabei darf sich die Lage der Kugellinse in ihrer Halterung nicht verändern, weil sonst die gewünschte genaue Ausrichtung der beiden Kuppen koaxial zur optischen Achse nicht erreichbar ist.

Bisher wurde eine Mehrzahl von Kugellinsen zwischen zwei starren Platten gehalten, in welche jeweils entsprechend der Anzahl der aufzunehmenden Kugellinsen Bohrungen angeordnet waren, durch welche Kuppen der Kugellinsen beidseitig hindurchragten. Die Platten wurden gegeneinander verschraubt. Wegen toleranzbedingter Durchmesserunterschiede waren die einzelnen Kugellinsen nicht gleich fest gehalten, so daß manche derart locker lagen, daß sich ihre Lage bei Erschütterungen oder Handhabungsschritten verändern konnte.

Der Erfindung liegt die Aufgabe zugrunde, die Vorrichtung der eingangs genannten Art derart zu gestalten, daß die Kugellinsen auf einfache Weise gegen Erschütterungen lagegesichert gehalten werden. Die Lösung gelingt dadurch, daß die Kugellinsen durch von individuell zugeordneten Klemmelementen aufgebrachte federelastische Kräfte gehalten sind.

Wegen der federnden Einklemmung der Kugellinsen werden diese auch bei unterschiedlichen Durchmessern fest und lagegesichert gehalten und können auf einfache Weise nach dem Auseinanderbiegen der Klemmelemente eingelegt werden. Die derart gehaltenen Kugellinsen können sich weder bei Reinigungsvorgängen noch bei folgenden Beschichtungsvorgängen verdrehen.

Bevorzugt sind die Klemmelemente Bestandteile einer einstückigen Klemmfeder und können mit ihren den kreisförmigen Öffnungen gegenüberliegenden Bereichen in einen Aufnahmeblock eingesteckt sein. Gemäß einer einfachen Ausführungsform sind die Klemmelemente an einem Ende miteinander verbundene Blattfedern.

Eine bevorzugte Ausführungsform ist dadurch gekennzeichnet, daß die Klemmelemente benachbarte Windungen einer Wendelfeder sind. Dabei wird die Kugellinse durch Federkräfte gehalten, die einerseits in Richtung der Achse der Wendelfeder wirken und welche zusätzlich auch durch Aufweitung des Durchmessers der Windungen erzeugt sind.

Derartige Federelemente sind preisgünstig herstellbar. Sie können nach einmaligem Gebrauch nach der jeweiligen Beschichtung der gehaltenen Kugellinse weggeworfen werden.

Das Einlegen der Kugellinsen ist besonders einfach, wenn die benachbarten Windungen der Wendelfeder zur Bildung von Zangenarmen gestreckt auslaufen. Duch Auslenkung der Zangenarme können die Durchmesser der Windungen soweit vergrößert werden, daß auf die Windungen gelegte Kugellinsen in die Haltelage gleiten.

Die Zangenarme können gleichzeitig zur Befestigung einer Vielzahl von erfindungsgemäßen Haltevorrichtungen an einem gemeinsamen Aufnahmeblock dienen. Sie können beispielsweise in am Umfang eines Aufnahmeblocks vorgesehene radiale Bohrungen eingesteckt sein.

Ein Aufnahmeblock kann insbesondere auch hohlzylindrisch ausgebildet sein, wobei dann die einzelnen Haltevorrichtungen an seinem Innenumfang anzuordnen sind. Die Form des Aufnahmeblocks ist im Rahmen der Erfindung beliebig gestaltbar und kann den jeweiligen Bedarfsfällen angepaßt werden, so daß eine einfache Einbringung der am Aufnahmeblock gehaltenen Klemmvorrichtungen mit den Kugellinsen in eine Beschichtungseinrichtung möglich ist.Die Beschichtung der Kugellinsen mit den Antireflexbelegen kann nach einem beliebigen an sich bekannten Verfahren erfolgen, beispielsweise durch Aufdampfen, Sputtern, Flammhydrolyse oder nach dem CVD-Verfahren (CVD = chemical vapor deposition).

Die Erfindung wird anhand der Beschreibung von in der Zeichnung dargestellten vorteilhaften Ausführungsbeispielen näher erläutert.

Fig. 1 zeigt eine Kugellinse mit antireflexiv beschichteten Kuppen.

Fig. 2 zeigt eine Kugellinse mit fehlerhaft beschichteten Kuppen.

Fig. 3 zeigt eine in blattfederförmigen Klemmelementen gehaltene Kugellinse.

Fig. 4 zeigt eine zwischen zwei Windungen einer Wendelfeder gehaltene Kugellinse.

Fig. 5 zeigt schematisch einen Aufnahmeblock mit einer Mehrzahl von daran angebrachten Wendelfedern nach Fig. 4.

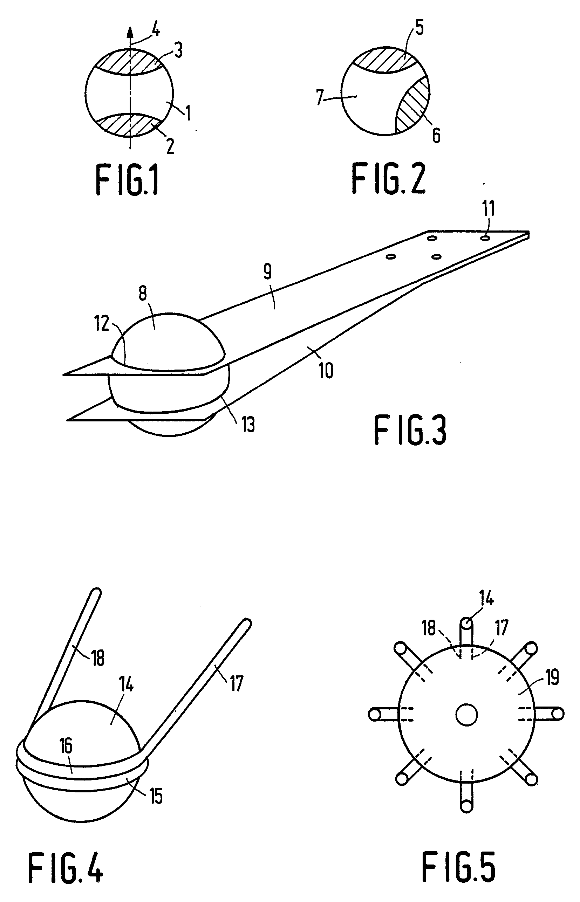

In Fig. 1 ist die Kugellinse 1 mit antireflexiven Schichten 2 und 3 versehen, welche kalottenförmig und in korrekter Weise koaxial zur optischen Achse 4 der Kugellinse 1 aufgebracht wurden.

Kugellinsen 7 nach Fig. 2 mit fehlerhaften Relativlagen der antireflexiven Schichten 5 und 6 sind unbrauchbar. Nach dem Aufbringen der ersten Schicht 5 wurde eine die Kugellinse 7 tragende Haltevorrichtung in um 180° geschwenkter Lage in die Beschichtungsvorrichtung eingesetzt. Dabei hatte sich die zu locker gehaltene Kugellinse 7 in der Haltevorrichtung einer bisher verwendeten Bauart gedreht.

Derartige Fehler treten bei Verwendung einer erfindungsgemäßen Haltevorrichtung nach Fig. 3 nicht mehr auf.

Eine Kugellinse 8 ist zwischen auseinandergespreizte Blattfedern 9 und 10 geklemmt, welche einseitig durch Punktschweißungen 11 aneinander befestigt sind. An ihrem freien Ende haben die Blattfedern 9 und 10 Bohrungen 12 und 13, deren Durchmesser geringer als der Durchmesser der Kugellinse 8 ist, so daß lediglich antireflexiv zu beschichtende Kuppen der Kugellinsen 8 hindurchragen. Die Blattfedern 9 und 10 könnten auch als Schenkel eines U-förmig gebogenen Federelements ausgebildet sein, so daß Punktschweißungen 11 entfallen können.

Bei einer bevorzugten Ausführungsform nach Fig. 4 ist eine Kugellinse 14 durch Windungen 15 und 16 eines Wendelfederelements gehalten. Durch Auseinanderspreizen der Zangenarme 17 und 18, in welche die Windungen 15 bzw. 16 auslaufen, wurde der Innendurchmesser der Windungen 15 und 16 so weit vergrößert, daß die aufgelegte Kugellinse 14 in die in Fig. 4 dargestellte Haltelage rutschen konnte. Danach wurden die Zangenarme 17 und 18 freigegeben, so daß die Windungen federnd an die Oberfläche der Kugellinse 14 andrücken und diese dabei in eine solche Lage bringen, daß beidseitig der Windungen 15 und 16 etwa gleich große symmetrische Oberflächenbereiche frei bleiben, auf denen anschließend die antireflektiven Schichten aufgebracht werden können.

Wie in Fig. 4 erkennbar ist, werden keineswegs zwei sich vollständig über 360° erstreckende Windungen 15 bzw. 16 benötigt. Beide Windungen zusammen sollten aber über einen Winkelbereich von mindestens 540° an der Kugellinse anliegen.

Die Windungen dürfen einander eng benachbart sein, so daß bereits ein geringes Aufspreizen der Zangenarme 17 und 18 ein Hineinrutschen der Kugellinse 14 ermöglicht. Ein gewisser Abstand ist jedoch vorteilhaft, wenn besonderer Wert auf eine symmetrische Klemmung der Kugellinse 14 gelegt wird. Dann wird darüberhinaus die Halterung der Kugellinse nicht mehr vorwiegend durch radiale Umfangskräfte der Windungen 15 und 16 bewirkt, sondern zusätzlich durch formschlüssige Fixierung in Richtung der optischen Achse, weil die Durchmesser der Windungen 15 und 16 dann stärker gegenüber dem Durchmesser der Kugellinse 14 verkleinert sind.

In Fig. 5 ist schematisch angedeutet, wie eine Mehrzahl von Anordnungen nach Fig. 4 mit den Zangenarmen 17 und 18 in zugeordnete und nach außen offene radiale Bohrungen eines zylinderscheibenförmigen Aufnahmeblocks 19 eingesteckt sind. Dazu ist es vorteilhaft, daß die Zangenarme 17 und 18 bei gehaltener Kugellinse 14 etwa parallel zueinander verlaufen.

## Ansprüche

1. Vorrichtung zur Halterung einer Kugellinse zwischen zwei Klemmelementen, welche einander gegenüberliegende kreisförmige Öffnungen aufweisen, deren Durchmesser kleiner als der Durchmesser der Kugellinse ist und deren Ringflächen die Kugellinsen derart erfassen, daß einander in der optischen Achse gegenüberliegende Kalottenflächen der Kugellinse für Beschichtungsprozesse zugänglich sind,
dadurch gekennzeichnet, daß die Kugellinsen (8,14) durch von individuell zugeordneten Klemmelementen (9,10 bzw. 15,16) aufgebrachte federelastische Kräfte gehalten sind.

2. Vorrichtung nach Anspruch 1,
dadurch gekennzeichnet, daß die Klemmelemente (9,10 bzw. 15,16) Bestandteile einer einstückigen Klemmfeder sind.

3. Vorrichtung nach einem der Ansprüche 1 oder 2,
dadurch gekennzeichnet, daß die Klemmelemente mit ihren den kreisförmigen Öffnungen gegenüberliegenden Bereichen in einen Aufnahmeblock (19) eingesteckt sind.

4. Vorrichtung nach einem der Ansprüche 1 bis 3,
dadurch gekennzeichnet, daß die Klemmelemente an einem Ende miteinander verbundene (Punktschweißungen 11) Blattfedern (9,11) sind.

5. Vorrichtung nach einem der Ansprüche 1 bis 3,
dadurch gekennzeichnet, daß die Klemmelemente benachbarte Windungen (15,16) einer Wendelfeder sind.

6. Vorrichtung nach Anspruch 5,
dadurch gekennzeichnet, daß die benachbarten Windungen (15,16) der Wendelfeder zur Bildung von Zangenarmen (17,18) gestreckt auslaufen.

7. Vorrichtung nach Anspruch 6,
dadurch gekennzeichnet, daß die Zangenarme. (17,18) in Bohrungen eines Aufnahmeblocks (19) eingesteckt sind.

FIG.1

FIG.2

FIG.3

FIG.4

FIG.5

PHD 88-019